# FASCICULE DE BREVET EUROPEEN

(11) **EP 2 814 225 B1**
(45) Date de publication et mention de la délivrance du brevet: **13.01.2016**
(21) Numéro de dépôt: 14170183.9
(22) Date de dépôt: 28.05.2014
(51) Int. Cl.: H04L 29/08, H04L 29/06, H04L 29/12, H04M 1/00, H04M 3/00, H04M 3/42

(54) **Procédé et dispositif correspondant de gestion de l'établissement d'une communication entre un terminal appelant et un groupe de terminaux partageant une même identité publique**
Verfahren und Vorrichtung zur Verwaltung der Herstellung einer Kommunikation zwischen einem anrufenden Endgerät und einer Gruppe von Endgeräten, die sich eine gemeinsame öffentliche Identität teilen
Method and corresponding device for managing call establishment between a calling terminal and a group of terminals sharing a single public identity

(30) Priorité: 31.05.2013 FR 1355006
(43) Date de publication de la demande: 17.12.2014
(73) Titulaire: Orange, 75015 Paris (FR)
(72) Inventeur: Besombe, Philippe, 22700 Louannec (FR); Toutain, François, 22700 Louannec (FR)

(56) Documents cités:
- EP-A1- 2 166 733
- FR-A1- 2 850 226
- US-A1- 2002 075 306

## Description

L'invention se situe dans le domaine des réseaux de télécommunication. Elle concerne un dispositif et un procédé de gestion de l'établissement d'une communication entre un terminal appelant et un groupe de terminaux partageant une même identité publique.

Aujourd'hui, un utilisateur peut recevoir une communication sur une pluralité de terminaux associés à une même identité publique partagée (IMPU pour IP Multimedia Public Identity en anglais) ou un même numéro de téléphone.

Lorsqu'un appel destiné à l'identité publique partagée est émis, la demande d'appel est transmise à la pluralité de terminaux et un utilisateur d'un terminal de la pluralité de terminaux peut décrocher l'appel à partir de son terminal.

L'inconvénient de cette technique est que l'utilisateur émettant la communication, ne sait pas que la communication peut être prise par n'importe quel terminal d'une pluralité de terminaux et il ne sait donc pas que plusieurs utilisateurs sont susceptibles de lui répondre.

De plus, l'utilisateur appelant ne connait pas l'état des terminaux de la pluralité de terminaux susceptibles de recevoir la communication. Par état d'un terminal, on entend ici notamment l'état de présence d'un terminal sur le réseau de communication, le fait que le terminal soit ou non enregistré dans le réseau de communication, ou que le terminal soit en cours de communication, occupé, injoignable, indisponible.

Le document WO2012089954 permet à un premier terminal enregistré dans un réseau de communication et associé à une identité publique partagée d'obtenir une information de la présence et de l'état d'un second terminal enregistré dans le réseau de communication et associé à la même identité publique partagée que le premier terminal. Un utilisateur du premier terminal est ainsi informé si un second terminal associé à la même identité publique partagée est enregistré dans le réseau de communication, s'il est en situation de nomadisme, s'il est occupé, etc...

Ainsi, lors de la réception d'une demande de communication destinée à l'identité publique partagée par le premier et le second terminal, l'utilisateur du premier terminal peut décider de répondre ou de ne pas répondre avec le premier terminal à la demande de communication selon l'état du second terminal.

Cette solution ne permet pas d'informer le terminal appelant de l'état des terminaux appelés car seuls les terminaux associés à la même identité publique partagée sont notifiés de l'état des premier et second terminaux appelés.

De plus, l'adaptation de cette solution pour que le terminal appelant soit informé de l'état des premier et second terminaux appelés, nécessiterait une complexité trop importante. En effet, il est impossible de prévoir à l'avance ni l'identité publique partagée vers laquelle le terminal appelant émettra une communication, ni le moment de l'émission d'une telle communication. Il faudrait alors sauvegarder en permanence dans le réseau de communication l'état de tous les terminaux enregistrés dans le réseau de communication susceptibles d'être appelés afin d'informer le terminal appelant de l'état des terminaux susceptibles d'être appelés lorsque le terminal appelant émet une communication vers l'identité publique partagée. Cette solution n'est pas envisageable car elle nécessiterait des ressources mémoire très importantes.

Le document FR 2 850 226 A1 (LIAKIS P) constitue l'état de la technique le plus proche.

### Exposé de l'invention

L'invention est définie par les revendications indépendantes de procédé 1 et 6, de terminal 12, de système 14 et de programme 15.

Un des buts de l'invention est d'apporter des améliorations par rapport à l'état de la technique.

Elle propose à cet effet un procédé de commande de l'établissement d'une communication entre un terminal et un groupe de terminaux associés à une même identité publique partagée. Le procédé comprend une étape d'émission par ledit terminal, via un réseau de communication, d'une demande de communication à destination de l'identité publique partagée. Le procédé comprend également une étape d'envoi à un serveur de gestion, d'une requête pour obtenir une information représentative du nombre et de l'état des terminaux du groupe de terminaux associés à l'identité publique partagée, une étape de réception de ladite information en provenance du serveur, et une étape de restitution de ladite information à un utilisateur du terminal émetteur de ladite demande de communication.

Corrélativement, l'invention concerne aussi un terminal mettant en oeuvre le procédé de commande de l'établissement d'une communication. Un tel terminal comprend notamment des moyens d'envoi à un serveur de gestion, d'une requête pour obtenir une information représentative du nombre et de l'état des terminaux du groupe de terminaux associés à l'identité publique partagée, des moyens de réception de ladite information, et des moyens de restitution de ladite information à un utilisateur dudit terminal.

Un état d'un terminal susceptible d'être appelé peut correspondre à un état de présence du terminal sur le réseau de communication via lequel la communication est établie, par exemple si le terminal est enregistré ou non dans le réseau de communication. L'état d'un terminal peut aussi correspondre à la réponse du terminal qui reçoit la demande de communication, par exemple sonnerie en cours pour avertir l'utilisateur du terminal de la demande de communication, terminal occupé, communication refusée, terminal indisponible.

Grâce au procédé selon l'invention, un utilisateur du terminal émetteur de la demande de communication est informé que sa demande de communication à destination de l'identité publique est envoyée à plusieurs terminaux et de l'état de ces terminaux.

Cette information est restituée à l'utilisateur par le terminal émetteur de la demande de communication par exemple sous une forme visuelle à l'aide d'une interface affichée sur l'écran du terminal émetteur de la demande de communication.

Selon un autre exemple, la restitution peut être une restitution audio de l'information par la diffusion d'un message vocal à l'utilisateur du terminal émetteur de la demande de communication indiquant que son appel est envoyé à plusieurs terminaux.

Les différents modes ou caractéristiques de réalisation mentionnés ci-après peuvent être ajoutés indépendamment ou en combinaison les uns avec les autres, aux étapes du procédé de commande de l'établissement d'une communication défini ci-dessus.

Selon un mode particulier de réalisation de l'invention, l'étape d'envoi d'une requête pour obtenir une information représentative du nombre et de l'état des terminaux du groupe de terminaux associés à l'identité publique partagée est mise en oeuvre préalablement à l'étape d'émission de la demande de communication. Suite à l'étape de restitution de ladite information, le procédé de commande de l'établissement d'une communication comprend en outre une étape d'interaction utilisateur sur le terminal émetteur de la demande de communication pour sélectionner parmi les terminaux du groupe de terminaux associés à l'identité publique partagée, au moins un terminal destinataire vers lequel la demande de communication doit être transmise, et une étape d'envoi au serveur de gestion, d'une commande de sélection du terminal destinataire.

Ainsi un utilisateur du terminal émetteur de la demande de communication peut choisir les terminaux vers lesquels il souhaite émettre la demande de communication afin d'établir la communication avec le terminal qui conviendrait le mieux au type de communication envisagé. Par exemple, s'il s'agit d'une communication professionnelle ou privée, l'utilisateur du terminal émetteur de la demande de communication peut choisir un terminal dont il connait l'utilisateur ou la localisation. Selon un autre exemple, pour optimiser la qualité de la communication, l'utilisateur du terminal émetteur de la demande de communication peut sélectionner un terminal disposant de caractéristiques spécifiques, par exemple un mobile ou un terminal fixe, ou permettant d'utiliser des fonctions de communications spécifiques, par exemple un terminal supportant les communications vidéo, ou le protocole RCS, etc...

Selon un autre mode particulier de réalisation de l'invention, suite à l'étape de restitution de l'information représentative du nombre et de l'état des terminaux du groupe de terminaux associés à l'identité publique partagée, le procédé de commande de l'établissement d'une communication comprend une étape d'interaction utilisateur sur le terminal émetteur de la demande de communication pour sélectionner parmi les terminaux du groupe de terminaux associés à l'identité publique partagée, au moins un terminal, et une étape d'envoi au serveur de gestion, d'une commande d'inhibition de l'envoi de la demande de communication vers le terminal sélectionné. Corrélativement, le terminal mettant en oeuvre le procédé de commande de l'établissement d'une communication comprend des moyens d'interaction utilisateur permettant de sélectionner parmi les terminaux du groupe de terminaux associés à l'identité publique partagée, au moins un terminal, et des moyens d'envoi d'une commande d'inhibition de l'envoi de la demande de communication vers le terminal sélectionné.

Lorsque la demande de communication est envoyée parallèlement ou préalablement à la réception par le terminal émetteur de la demande de communication du nombre et de l'état des terminaux destinataires vers lesquels la demande de communication est envoyée, ce mode particulier de réalisation de l'invention permet à l'utilisateur du terminal émetteur de la demande de communication de sélectionner un terminal vers lequel il souhaite interrompre l'envoi de la demande de communication.

Selon un autre mode particulier de réalisation de l'invention, suite à la réception en provenance d'un premier terminal du groupe de terminaux associés à l'identité publique partagée, d'une réponse positive à la demande de communication, le procédé de commande de l'établissement d'une communication comprend une étape d'interaction utilisateur sur le terminal émetteur de la demande de communication pour sélectionner parmi les terminaux du groupe de terminaux associés à l'identité publique partagée, au moins un deuxième terminal, et une étape d'envoi au serveur de gestion, d'une commande de continuation d'envoi de la demande de communication vers le deuxième terminal sélectionné.

Corrélativement, le terminal mettant en oeuvre le procédé de commande de l'établissement d'une communication comprend des moyens d'interaction utilisateur permettant de sélectionner parmi les terminaux du groupe de terminaux associés à l'identité publique partagée, au moins un terminal, et des moyens d'envoi d'une commande de continuation de l'envoi de la demande de communication vers le terminal sélectionné.

Après l'établissement de la communication entre le terminal émetteur de la demande de communication et un premier terminal destinataire, ce mode particulier de réalisation de l'invention permet à l'utilisateur du terminal émetteur de la demande de communication de sélectionner un autre terminal vers lequel il souhaite forcer la demande de communication. Ce mode particulier de réalisation de l'invention permet par exemple d'établir une communication à plus de deux terminaux. Par exemple, l'utilisateur du terminal émetteur de la demande de communication peut choisir d'ajouter un terminal destinataire disposant de capacités permettant d'enrichir la communication par exemple permettant l'ajout de la vidéo, l'affichage d'images ou de contenus interactifs au cours de la communication. Selon un autre exemple, l'utilisateur du terminal émetteur de la demande de communication peut aussi choisir d'inviter un utilisateur d'un terminal destinataire.

L'invention concerne également un procédé de gestion de l'établissement d'une communication entre un terminal et un groupe de terminaux associés à une même identité publique partagée, ledit terminal émettant, via un réseau de communication, une demande de communication à destination de l'identité publique partagée. Le procédé de gestion de l'établissement d'une communication comprend une étape de réception d'une requête en provenance du terminal émetteur de la demande de communication pour obtenir une information représentative du nombre et de l'état des terminaux du groupe de terminaux associés à l'identité publique partagée, une étape d'obtention de ladite information, et une étape d'envoi au terminal émetteur de la demande de communication de ladite information obtenue en vue d'une restitution à l'utilisateur du terminal émetteur de la demande de communication.

Le procédé de gestion de l'établissement d'une communication est mis en oeuvre par un serveur de gestion dans le réseau de communication. Un tel serveur comprend des moyens de réception d'une requête en provenance du terminal émetteur de la demande de communication pour obtenir une information représentative du nombre et de l'état des terminaux du groupe de terminaux associés à l'identité publique partagée, des moyens d'obtention de ladite information, et des moyens d'envoi au terminal émetteur de la demande de communication de ladite information obtenue en vue d'une restitution à l'utilisateur du terminal émetteur de la demande de communication.

Le procédé de gestion permet ainsi à un utilisateur du terminal émetteur de la demande de communication d'être informé que sa demande de communication à destination de l'identité publique partagée est envoyée à plusieurs terminaux et de l'état de ces terminaux au moment de l'envoi de la demande de communication par le terminal émetteur.

Les différents modes ou caractéristiques de réalisation mentionnés ci-après peuvent être ajoutés indépendamment ou en combinaison les uns avec les autres, aux étapes du procédé de gestion de l'établissement d'une communication défini ci-dessus.

Selon un mode particulier de réalisation de l'invention, l'étape d'envoi au terminal émetteur de la demande de communication de l'information représentative du nombre et de l'état des terminaux du groupe de terminaux associés à l'identité publique partagée n'est mise en oeuvre que si le terminal émetteur de la demande de communication est un terminal qui a été autorisé par un utilisateur d'un terminal associé à l'identité publique partagée à obtenir l'état d'un terminal dudit groupe de terminaux.

Les utilisateurs de l'identité publique partagée peuvent ainsi configurer quels utilisateurs et quels terminaux peuvent avoir accès à l'état des terminaux partageant la même identité publique. Par exemple, l'accès à l'état des terminaux partageant la même identité publique peut être restreint aux personnes de confiance, ou aux utilisateurs ou terminaux dont un identifiant est présent dans un carnet d'adresse associé à l'identité publique partagée ou dans un carnet d'adresse associé à un terminal du groupe de terminaux associés à l'identité publique partagée.

Selon un autre mode particulier de réalisation de l'invention, le procédé de gestion de l'établissement d'une communication comprend une étape de réception d'une commande, en provenance du terminal émetteur de la demande de communication, d'inhibition ou de continuation de l'envoi de la demande de communication vers un terminal sélectionné parmi les terminaux du groupe de terminaux associés à l'identité publique partagée, et une étape d'envoi au réseau de communication d'un message de gestion de la demande de communication, provoquant l'inhibition ou la continuation de l'envoi de la demande de communication vers le terminal sélectionné.

Le procédé de gestion de l'établissement d'une communication permet ainsi de contrôler l'envoi dans le réseau de communication de la demande de communication à destination d'une identité publique partagée par un groupe de terminaux, selon des commandes reçues depuis le terminal émetteur de la demande de communication.

Selon un autre mode particulier de réalisation de l'invention, le procédé de gestion de l'établissement d'une communication comprend une étape d'envoi à un terminal destinataire du groupe de terminaux d'une information indiquant à l'utilisateur du terminal destinataire que le terminal émetteur de la demande de communication a émis une requête pour obtenir une information représentative du nombre et de l'état du groupe de terminaux associés à l'identité publique partagée.

L'utilisateur du terminal destinataire est ainsi informé que le terminal émetteur de la demande de communication a demandé une information sur l'état de présence des terminaux associés à l'identité publique partagée et que l'utilisateur du terminal émetteur est donc susceptible d'appeler le terminal destinataire.

Selon un autre mode particulier de réalisation de l'invention, le procédé de gestion de l'établissement d'une communication comprend une étape de réception d'une information de mise à jour d'un état relatif à un terminal destinataire du groupe de terminaux associés à l'identité publique partagée, et une étape d'envoi au terminal émetteur de la demande de communication d'un message comprenant ladite information de mise à jour et permettant de modifier sur le terminal émetteur de la demande de communication la restitution de l'information représentative du nombre et de l'état du groupe de terminaux associés à l'identité publique partagée.

Lorsque l'utilisateur destinataire est informé que le terminal émetteur de la demande de communication a demandé une information sur l'état de présence des terminaux associés à l'identité publique partagée, il peut décider de modifier son état de présence afin par exemple de ne pas être dérangé par un appel émis par le terminal émetteur de la demande de communication, ou au contraire pour recevoir la communication que le terminal émetteur de la demande de communication va éventuellement émettre.

Dans un mode particulier de réalisation, les différentes étapes du procédé de commande de l'établissement d'une communication et les différentes étapes du procédé de gestion de l'établissement d'une communication sont déterminées par des instructions de programmes d'ordinateurs.

En conséquence, l'invention vise aussi des programmes d'ordinateur sur un support d'informations, ces programmes étant susceptibles d'être mis en oeuvre respectivement dans un terminal ou plus généralement dans un ordinateur, ces programmes comportant respectivement des instructions adaptées à la mise en oeuvre des différentes étapes des procédés qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution des procédés en question.

### Liste des figures

D'autres avantages et caractéristiques de l'invention apparaîtront plus clairement à la lecture de la description suivante de plusieurs modes de réalisation particuliers de l'invention, donnés à titre de simples exemples illustratifs et non limitatifs, et des dessins annexés, parmi lesquels:
- la figure 1 illustre un environnement de mise en oeuvre d'un mode particulier de réalisation de l'invention,
- la figure 2 présente un chronogramme illustrant des étapes du procédé de commande de l'établissement d'une communication et des étapes du procédé de gestion de l'établissement d'une communication selon un mode particulier de réalisation de l'invention,
- la figure 3 présente un chronogramme illustrant des étapes du procédé de commande de l'établissement d'une communication et des étapes du procédé de gestion de l'établissement d'une communication selon un autre mode particulier de réalisation de l'invention,
- la figure 4 présente un chronogramme illustrant des étapes du procédé de commande de l'établissement d'une communication et des étapes du procédé de gestion de l'établissement d'une communication selon un autre mode particulier de réalisation de l'invention,
- la figure 5 présente un chronogramme illustrant des étapes du procédé de commande de l'établissement d'une communication et des étapes du procédé de gestion de l'établissement d'une communication selon un autre mode particulier de réalisation de l'invention,
- la figure 6 illustre un dispositif permettant de mettre en oeuvre le procédé de gestion de l'établissement d'une communication selon un mode particulier de réalisation de l'invention,
- la figure 7 illustre un dispositif permettant de mettre en oeuvre le procédé de commande de l'établissement d'une communication selon un mode particulier de réalisation de l'invention.

### Description d'un mode particulier de réalisation de l'invention

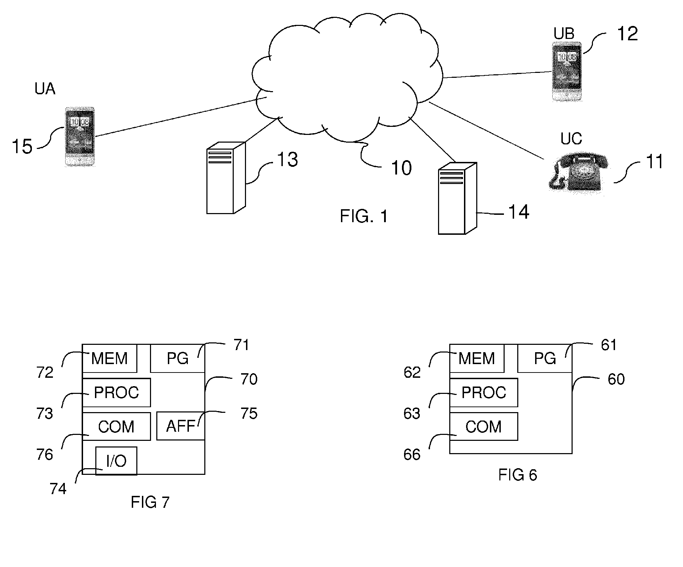

La figure 1 illustre un environnement de mise en oeuvre d'un mode particulier de réalisation de l'invention. L'environnement comprend un réseau de communication 10 auquel sont connectés trois terminaux 11, 12 et 15, un serveur de gestion 13 et un serveur d'application 14. Les terminaux 11, 12 et 15 peuvent être tout type de terminaux permettant d'établir une communication téléphonique ou visiophonique, tels qu'un téléphone portable, un smartphone (téléphone intelligent en anglais), une tablette, une télévision connectée à un réseau de télécommunications, un ordinateur personnel sur lequel une application de téléphonie, aussi appelé softphone, est installée. Le réseau de communication 10 peut correspondre par exemple à un réseau IP (pour Internet Protocol en anglais), ou un réseau de communications mobile de type GSM, EDGE, 3G, 3G+... Le réseau de communication 10 représenté peut correspondre à un groupe de réseaux de communication d'opérateurs différents interconnectés entre eux permettant d'échanger des données et d'établir des communications entre des terminaux connectés au réseau de communication 10 par l'intermédiaire de points d'accès (non représentés) au réseau de communication.

Le serveur de gestion 13 et le serveur d'application 14 sont des serveurs appartenant à un opérateur du réseau de communication 10. L'utilisateur UB a souscrit un abonnement auprès d'un opérateur du réseau de communication 10. Le serveur d'application 14 est un serveur permettant de gérer la signalisation des appels destinés à l'identité publique de l'utilisateur UB.

Les terminaux 12 et 11 sont associés à la même identité publique IMPU. Par exemple, le terminal 11 correspond au terminal fixe du domicile de l'utilisateur UB et le terminal 12 correspond au terminal mobile de l'utilisateur UB. Typiquement, le terminal 11 peut être utilisé par n'importe quel utilisateur UC situé au domicile de l'utilisateur UB pour émettre ou prendre un appel.

Lorsqu'un appel est émis par exemple par le terminal 15, à destination de l'identité publique partagée par les terminaux 11 et 12, le réseau de communication 10 achemine la demande d'appel vers les deux terminaux 11 et 12. Lorsqu'un des terminaux 11 ou 12 accepte la demande d'appel, par exemple le terminal 11, une communication est établie entre le terminal 11 et le terminal 15, via le réseau de communication 10.

Lorsque le terminal 15 émet une demande d'appel à destination de l'identité publique partagée, l'utilisateur UA du terminal 15 ne sait pas que la demande d'appel va être acheminée par le réseau de communication 10 vers plusieurs terminaux tels que les terminaux 11 et 12, ni quel est l'état de présence de ces terminaux destinataires de la demande d'appel.

Par état de présence d'un terminal, on entend ici notamment l'information indiquant si le terminal est connecté au réseau de communication, si le terminal est libre pour recevoir une communication ou déjà en cours de communication, etc... Dans un souci de concision, l'état de présence sera appelé état dans la suite de la description.

L'invention est notamment mise en oeuvre par le serveur de gestion 13 qui fournit un service de gestion de l'établissement de communications aux utilisateurs abonnés au service. Ainsi, afin de mettre en oeuvre l'invention, l'utilisateur UB ayant souscrit au service de son opérateur pour pouvoir associer plusieurs terminaux à une même identité publique, doit avoir configuré le service afin d'autoriser ou non des terminaux ou des utilisateurs d'utiliser le service de gestion de l'établissement de communication vers son identité publique.

Un utilisateur appelant, par exemple l'utilisateur UA, doit de son côté souscrire au service de gestion de l'établissement de communication auprès de l'opérateur de l'utilisateur UB ou installer sur son terminal 15 une application fournie par l'opérateur de l'utilisateur UB ou par un opérateur tiers, l'application permettant de mettre en oeuvre le procédé de commande de l'établissement d'une communication.

Le procédé de commande de l'établissement d'une communication à destination d'une identité publique partagée par plusieurs terminaux est mis en oeuvre par le terminal 15 lors de la phase d'établissement de la communication ou préalablement à la demande de communication. Le procédé de commande de l'établissement d'une communication est par exemple mis en oeuvre par une application dédiée téléchargée sur le terminal 15 et fonctionnant en coopération avec l'application de communication du terminal 15.

Selon un autre exemple, le procédé de commande de l'établissement d'une communication est intégré dans l'application de communication du terminal 15. Le procédé de commande de l'établissement d'une communication permet à l'utilisateur UA du terminal 15 d'obtenir depuis le serveur de gestion 13 une information indiquant le nombre et l'état des terminaux destinataires de la demande de communication.

A cet effet, le serveur de gestion 13 met en oeuvre le procédé de gestion de l'établissement d'une communication. Sur requête du terminal 15, le serveur de gestion 13 communique avec le réseau de communication 10 pour obtenir une information indiquant le nombre et l'état des terminaux associés à l'identité publique partagée. Le serveur de gestion 13 communique ensuite avec le terminal 15 afin de lui transmettre cette information. Eventuellement, le serveur de gestion 13 communique avec les terminaux 11 et 12 associés à l'identité publique partagée afin d'informer l'utilisateur UB ou bien respectivement l'utilisateur UC et l'utilisateur UB que le terminal 15 a demandé leur état.

Selon un mode particulier de réalisation de l'invention, les communications du serveur 13 avec d'une part les terminaux 15, 11 et 12 et avec d'autre part des serveurs du réseau de communication 10 sont par exemple mises en oeuvre selon un protocole HTTP (pour HyperText Transfer Protocol en anglais). D'autres protocoles de communications peuvent être utilisés pour les communications entre le serveur de gestion 13 et les terminaux 15, 11 et 12, par exemple un protocole opérateur.

Dans les modes de réalisation décrits ici, le réseau de communication 10 est un réseau de type IMS (pour IP Multimedia Subsystem en anglais) et le protocole SIP (pour Session Initiation Protocol) est utilisé pour décrire les messages de signalisation d'appel échangés entre les terminaux 15, 11, 12 et le serveur d'application 14.

L'invention ne se limite ni au réseau de communication de type IMS, ni au protocole SIP. L'invention s'applique à d'autres types de réseaux de communication et d'autres protocoles de communication.

Selon un mode particulier de réalisation de l'invention, le serveur de gestion 13 peut être intégré dans le serveur d'application 14.

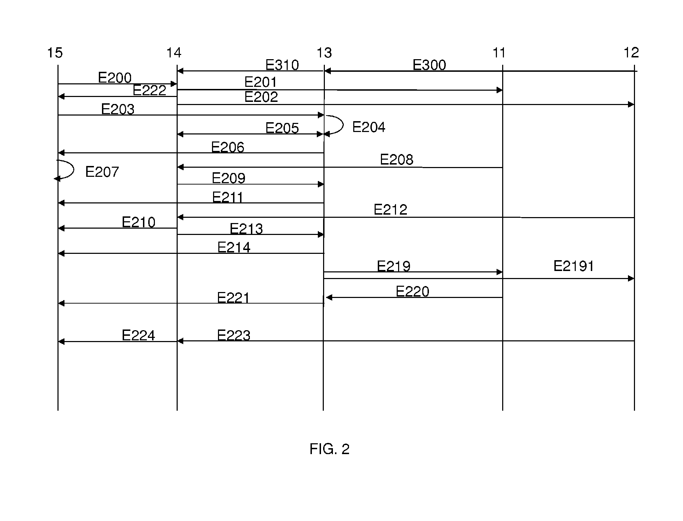

La figure 2 présente un chronogramme illustrant des étapes du procédé de commande de l'établissement d'une communication et des étapes du procédé de gestion de l'établissement d'une communication selon un mode particulier de réalisation de l'invention.

Dans ce mode particulier de réalisation de l'invention, les terminaux 11 et 12 sont associés à une même identité publique partagée affectée à l'utilisateur UB par un opérateur de télécommunications.

L'identité publique de l'utilisateur UB correspond par exemple au numéro d'appel permettant de joindre l'utilisateur UB sur l'un des terminaux 11 et 12.

L'utilisateur UB configure au préalable, auprès du serveur de gestion 13, l'utilisation du service permettant d'associer plusieurs terminaux à son identité publique. Par exemple, tous les contacts d'un carnet d'adresses associé à l'utilisateur UB ou à un des terminaux 11 et 12 de l'utilisateur UB peuvent avoir accès sur requête à des informations relatives à l'identité publique affectée à l'utilisateur UB. Les informations relatives à l'identité publique correspondent ici au nombre de terminaux associés à l'identité publique partagée et à l'état des terminaux associés à l'identité publique partagée.

Lors de l'étape de configuration E300, l'utilisateur UB définit les terminaux pouvant avoir accès à des informations relatives à l'identité publique affectée à l'utilisateur UB.

Selon un mode particulier de réalisation de l'invention, le serveur de gestion stocke dans un espace mémoire des identifiants des terminaux autorisés déterminés par l'utilisateur UB. De tels identifiants peuvent correspondre à un numéro de téléphone du terminal, à un numéro IMEI (pour International Mobile Equipement Identity en anglais) d'un terminal mobile, une adresse URI (pour Uniform Resource Identifier), une adresse de courriel, etc...

En variante, une configuration des terminaux autorisés est stockée dans un espace mémoire dans lequel est mémorisé un carnet d'adresses associé à l'utilisateur UB. Le carnet d'adresses associé à l'utilisateur UB est stocké dans un serveur du réseau de communication de l'opérateur de l'utilisateur UB.

Par exemple, un paramètre est positionné en association avec chaque contact du carnet d'adresses de l'utilisateur UB. Le paramètre indique si le contact est autorisé à avoir accès à des informations relatives à l'identité publique affectée à l'utilisateur UB.

De la même manière, un paramètre peut être positionné en association avec chaque contact d'un carnet d'adresses d'un autre utilisateur UC associé à la même identité publique que l'utilisateur UB. L'utilisateur UB autorise le terminal 15 de l'utilisateur UA à accéder à des informations relatives à l'identité publique associée à l'utilisateur UB.

Lors de l'étape de configuration E310, le serveur de gestion 13 informe le serveur d'application 14 que l'utilisateur UB a configuré l'accès à des informations relatives à son identité publique. Lorsque l'utilisateur UA du terminal 15 souhaite établir une communication avec un interlocuteur tel que l'utilisateur UB, l'utilisateur UA compose le numéro de téléphone de l'interlocuteur UB sur son terminal 15, provoquant l'envoi, lors d'une étape E200, d'une demande de communication à travers le réseau de communication 10, à destination de l'identité publique correspondant au numéro d'appel de l'utilisateur UB. La demande de communication destinée à l'identité publique associée à l'utilisateur UB est reçue par le serveur d'application 14.

La demande de communication émise par le terminal 15 correspond à un message INVITE selon le protocole de communication SIP (pour Session Initiation Protocol en anglais).

Suite à l'émission de la demande de communication, le serveur d'application 14 transmet de façon connue la demande de communication respectivement vers les terminaux 11 et 12 lors des étapes respectives E201 et E202, par l'envoi de messages INVITE aux terminaux 11 et 12.

Comme l'utilisateur UB a configuré le service permettant d'accéder à des informations relatives à son identité publique, lors d'une étape E222, le serveur d'application 14 transmet au terminal 15 en réponse à la demande de communication, un message SIP 100 Trying contenant notamment une information permettant au terminal 15 d'accéder au serveur de gestion 13.

En variante, l'adresse pour accéder au serveur de gestion 13 a été mémorisée dans le terminal 15 lors de l'installation par le terminal 15 de l'application permettant d'accéder au service de gestion de l'établissement d'une communication.

Lors de l'étape E203, le terminal 15 émet vers le serveur de gestion 13 une requête pour obtenir une information représentative du nombre et de l'état des terminaux associés à l'identité publique partagée par les terminaux 11 et 12. La requête émise par le terminal 15 vers le serveur de gestion 13 contient notamment le numéro d'appel de l'utilisateur UB.

Sur réception, au cours de l'étape E203, de la requête en provenance du terminal 15, le serveur de gestion 13 vérifie si le terminal 15 est un terminal autorisé à avoir accès à des informations relatives à l'identité publique associée à l'utilisateur UB, lors d'une étape E204.

Pour cela, le serveur de gestion 13 examine les données de configuration stockées lors de l'étape E300. Par exemple, le serveur de gestion 13 examine si le numéro de téléphone du terminal 15 est un identifiant déterminé par l'utilisateur UB, ou si dans le carnet d'adresses associé à l'utilisateur UB, le numéro de téléphone du terminal 15 est présent et si le paramètre associé au numéro de téléphone du terminal 15 indiquant si le contact est autorisé à avoir accès à des informations relatives à l'identité publique affectée à l'utilisateur UB est positionné à vrai.

Comme l'utilisateur UB a autorisé le terminal 15 à accéder à des informations relatives à l'identité publique affectée à l'utilisateur UB, lors d'une étape E205, le serveur de gestion 13 obtient depuis le serveur d'application 14 une information représentative du nombre et de l'état des terminaux associés à l'identité publique affectée à l'utilisateur UB. De manière connue, le serveur d'application 14 a connaissance de l'état des terminaux par exemple en interrogeant le coeur de réseau de communication de l'opérateur dont l'utilisateur UB est abonné.

L'obtention par le serveur de gestion 13 d'une information représentative du nombre et de l'état des terminaux associés à l'identité publique affectée à l'utilisateur UB est mise en oeuvre par des échanges de messages avec le serveur d'application 14 selon le protocole HTTP par exemple. L'information représentative du nombre et de l'état des terminaux associés à l'identité publique affectée à l'utilisateur UB comprend notamment : le nombre de terminaux associés à l'identité publique, la liste des terminaux associés à l'identité publique, un identifiant associé à chaque terminal. En variante, l'information de l'état d'un terminal peut comprendre aussi le type du terminal : terminal fixe ou mobile, téléphone, tablette, modèle du terminal. L'information de l'état d'un terminal peut comprendre des informations données par l'utilisateur UB lors de l'étape de configuration E300, par exemple un identifiant d'un utilisateur ou d'un groupe d'utilisateurs, des préférences horaires pour joindre l'utilisateur, des préférences de mode de communication, une adresse alternative pour communiquer, etc...

Los de l'étape E206, le serveur de gestion 13 envoie au terminal 15 l'information représentative du nombre et de l'état des terminaux associés à l'identité publique affectée à l'utilisateur UB.

Le terminal 15 restitue ensuite l'information reçue à l'utilisateur UA du terminal 15 lors de l'étape E207. Le terminal 15 affiche sur son écran une interface comprenant une liste des terminaux associés à l'identité publique affectée à l'utilisateur UB, ainsi que l'état de ces terminaux. L'état des terminaux peut par exemple être: terminal enregistré dans le réseau de communication, terminal injoignable, etc... L'état d'un terminal peut être indiqué sous la forme d'un texte affiché à côté d'un identifiant du terminal ou sous la forme d'un signe descriptif d'un état de présence par exemple un rond rouge pour « non connecté », orange pour « occupé » ou vert pour « disponible ».

En variante, le serveur de gestion 13 obtient lors de l'étape E205 une information représentative du seul nombre de terminaux associés à l'identité publique affectée à l'utilisateur UB. Le terminal 15 ne restitue alors à l'utilisateur UB que le nombre de terminaux associés à l'identité publique affectée à l'utilisateur UB et non l'état de ces terminaux.

Dans le mode particulier de réalisation décrit en relation avec la figure 2, la demande de communication émise par le terminal 15 lors de l'étape E200 est transmise en parallèle ou préalablement à l'envoi au terminal 15 par le serveur de gestion 13 de l'information représentative du nombre et de l'état des terminaux associés à l'identité publique affectée à l'utilisateur UB.

Suite à la réception de la demande de communication par le terminal 11, respectivement 12, le terminal 11, respectivement 12, répond par l'envoi au serveur d'application 14 d'un message SIP 180 Ringing lors de l'étape E208, respectivement E212. Le message SIP 180 Ringing indique que le terminal émettant ce message produit une sonnerie afin d'informer l'utilisateur UA du terminal 15 d'une demande de communication.

Suite à la réception d'un premier message de réponse à la demande de communication reçu en provenance d'un terminal associé à l'identité publique affectée à l'utilisateur UB, ici un message SIP 180 Ringing envoyé par le terminal 11, le serveur d'application 14 prolonge le message SIP 180 Ringing vers le terminal 15 lors d'une étape E210.

Lors d'une étape E209, respectivement E213, le serveur d'application 14 informe le serveur de gestion 13 de l'état du terminal 11, respectivement 12, à partir de la réponse à la demande de communication reçue depuis le terminal 11, respectivement 12.

Lors d'une étape E211, respectivement E214, le serveur de gestion 13 envoie alors au terminal 15 un message de mise à jour de l'état du terminal 11, respectivement 12, afin que le terminal 15 mette à jour la restitution de l'état des terminaux sur l'écran du terminal 15.

Par exemple, si l'état du terminal 11 reçu lors de l'étape E206 était « terminal enregistré dans le réseau de communication », le terminal 15 met à jour l'interface affichée en modifiant l'état du terminal 11 en « sonnerie en cours sur le terminal ».

Par exemple, si l'état du terminal 12 reçu lors de l'étape E206 était « terminal enregistré dans le réseau de communication », le terminal 15 met à jour l'interface affichée en modifiant l'état du terminal 12 en « sonnerie en cours sur le terminal ».

Selon une variante de ce mode particulier de réalisation de l'invention, le message de mise à jour de l'état du terminal 11, respectivement 12, envoyé par le serveur de gestion 13 correspond au message de réponse (message SIP 180 Ringing) à la demande de communication envoyée par le terminal 11, respectivement 12, au serveur d'application 14. Dans cette variante, le terminal 15 modifie l'affichage de l'interface de l'application de communication pour mettre à jour l'état des terminaux 11 et 12 à partir du message de réponse reçu.

Lors d'une étape E219, respectivement E2191, le serveur de gestion 13 envoie au terminal 11, respectivement 12, un message portant une information indiquant à l'utilisateur UC du terminal 11, respectivement à l'utilisateur UB du terminal 12, que le terminal 15 a émis une requête pour obtenir une information représentative du nombre et de l'état des terminaux associés à l'identité publique affectée à l'utilisateur UB.

Suite à la réception d'un tel message, l'utilisateur UC modifie l'état de présence de son terminal 11, par exemple en dés-enregistrant son terminal 11 du réseau de communication 10 ou en désactivant sur son terminal 11 la réception de communications. Le terminal 11 envoie alors un message de mise jour de son état au serveur de gestion 13 lors d'une étape E220. Ce message de mise à jour est par exemple envoyé selon le protocole HTTP.

Suite à la réception de mise à jour de l'état du terminal 11, le serveur de gestion 13 envoie au terminal 15 un message de mise à jour de l'état du terminal 11 lors d'une étape E221 afin que le terminal 15 mette à jour la restitution de l'état du terminal 11 sur l'écran du terminal 15.

Le terminal 15 met à jour l'interface affichée en modifiant l'état du terminal 11 en « terminal indisponible ».

L'utilisateur UB décroche son terminal 12 afin de prendre la communication demandée par le terminal 15. Lors d'une étape E223, le terminal 12 envoie alors un message SIP 200 OK au serveur d'application 14. Le serveur d'application 14 prolonge ensuite ce message vers le terminal 15 lors d'une étape E224. La communication s'établit ensuite de manière connue entre les terminaux 15 et 12.

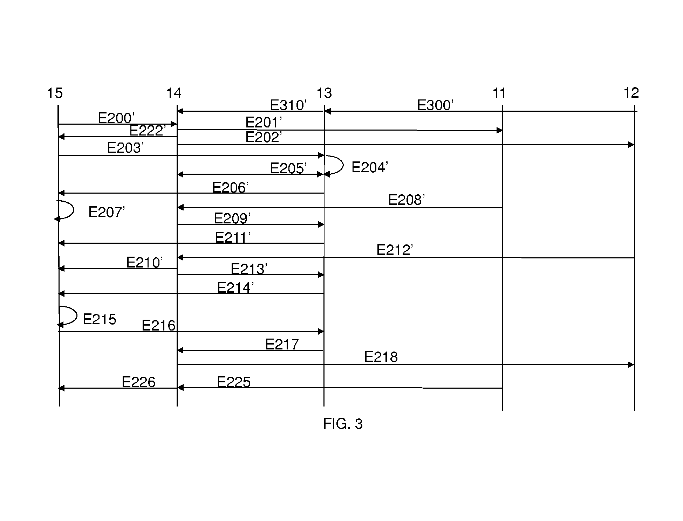

La figure 3 présente un chronogramme illustrant des étapes du procédé de commande de l'établissement d'une communication et des étapes du procédé de gestion de l'établissement d'une communication selon un autre mode particulier de réalisation de l'invention.

Les étapes E200' à E214', E222', E300' et E310' sont identiques aux étapes correspondantes décrites en relation avec la figure 2.

Dans ce mode particulier de réalisation de l'invention, lorsque l'utilisateur UA reçoit l'information indiquant l'état des terminaux 11 et 12, l'utilisateur UA souhaite arrêter l'envoi vers le terminal 12 de la demande d'établissement de la communication demandée à l'étape E200'.

Pour cela, lors d'une étape E215, le terminal 15 reçoit une commande d'interaction utilisateur de l'utilisateur UA pour sélectionner un terminal cible parmi les terminaux 11 et 12 associés à l'identité publique affectée à l'utilisateur UB. Le terminal cible sélectionné est ici le terminal 12. L'utilisateur UA choisit également par exemple dans un menu affiché sur le terminal 15, une commande de gestion de l'établissement de la communication. L'utilisateur UA choisit une commande d'inhibition afin d'arrêter l'envoi au terminal 12 de la demande d'établissement de la communication.

La commande d'inhibition est envoyée par le terminal 15 au serveur de gestion 13 lors d'une étape E216. Au cours de cette étape E216, le serveur de gestion 13 reçoit la commande d'inhibition. Le serveur de gestion 13 envoie la commande au serveur d'application 14 lors d'une étape E217.

Lors de l'étape E218, le serveur d'application 14 envoie alors un message SIP CANCEL au terminal 12 pour arrêter la demande d'établissement de communication et faire stopper la sonnerie déclenchée sur le terminal 12.

L'utilisateur UC décroche son terminal 11 afin de prendre la communication demandée par le terminal 15. Lors d'une étape E225, le terminal 11 envoie alors un message SIP 200 OK au serveur d'application 14. Le serveur d'application 14 prolonge ensuite ce message vers le terminal 15 lors d'une étape E226. La communication s'établit ensuite de manière connue entre les terminaux 15 et 11.

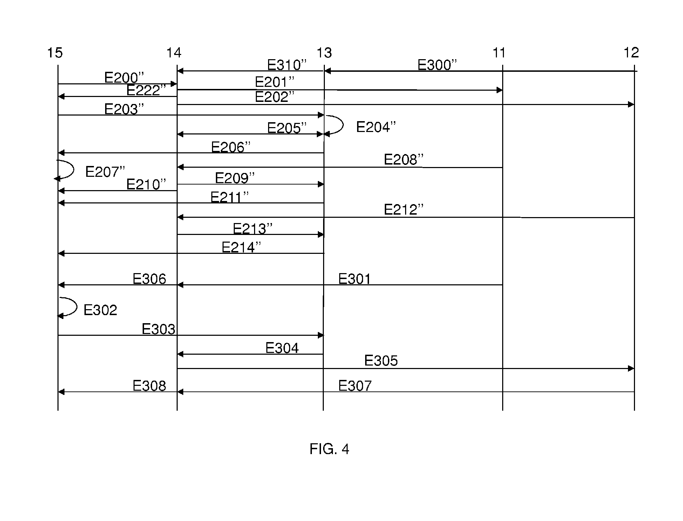

La figure 4 présente un chronogramme illustrant des étapes du procédé de commande de l'établissement d'une communication et des étapes du procédé de gestion de l'établissement d'une communication selon un autre mode particulier de réalisation de l'invention.

Les étapes E200" à E214", E222", E300" et E310" sont identiques aux étapes correspondantes décrites en relation avec la figure 2.

Dans ce mode particulier de réalisation de l'invention, lorsque l'utilisateur UC prend la communication avec son terminal 11, l'utilisateur UA souhaite forcer l'établissement de la communication également avec le terminal 12. Ce mode particulier de réalisation permet par exemple que si le terminal 11 de l'utilisateur UC n'autorise que les communications en mode audio, d'ajouter le terminal 12 à la communication en cours entre les terminaux 15 et 11 afin d'utiliser d'autres média lors de la communication, tels que l'affichage d'images, de vidéo, l'utilisation d'un outil de dessin, etc....

Selon un autre exemple, ce mode particulier de réalisation permet d'inviter un autre interlocuteur, ici l'utilisateur UB du terminal 12, à se joindre à la communication en cours entre les terminaux 15 et 11.

Lors de l'étape E301, l'utilisateur UC décroche son terminal 11 afin de prendre la communication demandée lors de l'étape E200" par le terminal 15. Le terminal 11 envoie alors un message SIP 200 OK au serveur d'application 14. Le serveur d'application 14 prolonge ensuite ce message vers le terminal 15 lors d'une étape E306. La communication s'établit ensuite de manière connue entre les terminaux 15 et 11.

Lors d'une étape E302, le terminal 15 reçoit une commande d'interaction utilisateur de l'utilisateur UA pour sélectionner un terminal cible parmi les terminaux 11 et 12 associés à l'identité publique affectée à l'utilisateur UB. Le terminal cible sélectionné est ici le terminal 12. L'utilisateur UA choisit également par exemple dans un menu affiché sur le terminal 15, une commande de gestion de l'établissement de la communication. L'utilisateur UA choisit une commande de poursuite afin de poursuivre l'envoi au terminal 12 de la demande d'établissement de la communication.

La commande de poursuite est envoyée par le terminal 15 au serveur de gestion 13 lors d'une étape E303. Au cours de cette étape, le serveur de gestion 13 reçoit la commande de poursuite. Le serveur de gestion 13 envoie la commande au serveur d'application 14 lors d'une étape E304. Lors de l'étape E305, le serveur d'application 14 envoie alors un message SIP INVITE au terminal 12 pour poursuivre la demande d'établissement de communication et forcer le terminal 12 à produire la sonnerie indiquant à l'utilisateur UB qu'une demande de communication a été reçue. Lors de l'étape E307, lorsque l'utilisateur UB décroche son terminal 12 afin de prendre la communication demandée lors de l'étape E305 par le terminal 15, le terminal 12 envoie un message SIP 200 OK au serveur d'application 14. Le serveur d'application 14 prolonge ensuite ce message vers le terminal 15 lors d'une étape E308. La communication s'établit ensuite de manière connue entre les terminaux 15, 11 et 12 à l'aide par exemple d'un pont de conférence.

En variante (non représentée sur la figure 4), l'utilisateur UB peut refuser de prendre la communication demandée lors de l'étape E305. Dans ce cas, le terminal 12 envoie un message SIP 486 BUSY ou un message SIP 480 Temporary Unavailable au serveur d'application 14 qui prolonge le message vers le terminal 15. L'affichage du terminal 15 est alors modifié pour informer l'utilisateur UA du refus de l'utilisateur UB. Par exemple, le terminal 15 met à jour l'interface affichée en modifiant l'état du terminal 12 en « appel refusé ».

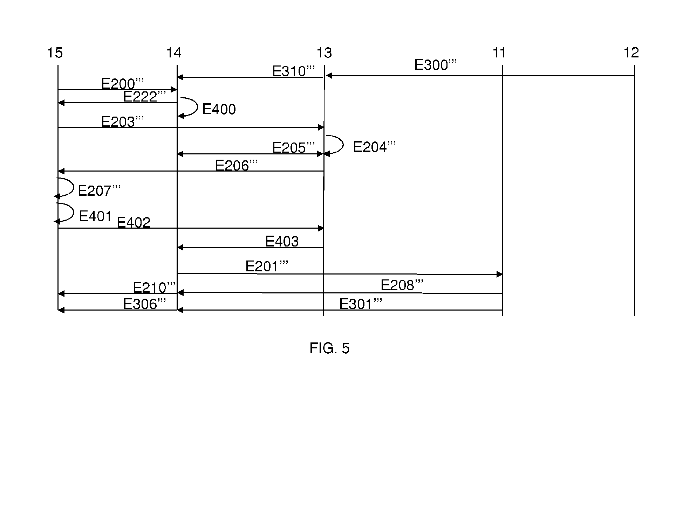

La figure 5 présente un chronogramme illustrant des étapes du procédé de commande de l'établissement d'une communication et des étapes du procédé de gestion de l'établissement d'une communication selon un autre mode particulier de réalisation de l'invention.

Dans ce mode particulier de réalisation de l'invention, le procédé de commande de l'établissement d'une communication est mis en oeuvre préalablement à l'envoi de la demande de communication vers les terminaux 11 et 12 de l'identité publique associée à l'utilisateur UB.

Les étapes E300'" et E310"' sont identiques aux étapes correspondantes décrites en relation avec la figure 2.

Lorsque l'utilisateur UA du terminal 15 souhaite établir une communication avec un interlocuteur UB, l'utilisateur UA compose le numéro de téléphone de l'interlocuteur UB sur son terminal 15, provoquant l'envoi au serveur d'application 14 d'une demande de communication, sous la forme d'un message SIP INVITE, lors d'une étape E200"'.

Dans ce mode particulier de réalisation de l'invention, l'utilisateur UA a souscrit au service de gestion de l'établissement d'une communication, auprès de l'opérateur de l'utilisateur UB ou d'un fournisseur tiers du service. L'information de souscription de l'utilisateur UA est sauvegardée dans une mémoire sur un serveur du réseau de communication.

Le serveur d'application 14 détecte lors d'une étape E400 que l'utilisateur UA a souscrit au service de gestion de l'établissement d'une communication. Par exemple, le serveur d'application 14 accède aux données de souscription de l'utilisateur UA sauvegardées dans le réseau de communication. Selon un autre exemple, une information indiquant que l'utilisateur UA a souscrit au service de gestion de l'établissement d'une communication est transmise dans un champ du message envoyé lors de l'étape E200"'.

Lors de l'étape E400, le serveur d'application 14 met alors en attente l'envoi des messages de demande de communication aux terminaux 11 et 12.

Lors d'une étape E222"', le serveur d'application 14 transmet au terminal 15, en réponse à la demande de communication, un message SIP 100 Trying contenant notamment une information permettant au terminal 15 d'accéder au serveur de gestion 13.

Lors de l'étape E203"', le terminal 15 émet vers le serveur de gestion 13 une requête pour obtenir une information représentative du nombre et de l'état des terminaux associés à l'identité publique partagée par les terminaux 11 et 12. La requête émise par le terminal 15 vers le serveur de gestion 13 contient notamment le numéro d'appel de l'utilisateur UB.

Sur réception de la requête en provenance du terminal 15, le serveur de gestion 13 vérifie si le terminal 15 est un terminal autorisé à avoir accès à des informations relatives à l'identité publique associée à l'utilisateur UB, lors d'une étape E204'" identique à l'étape E204 décrite en relation avec la figure 2.

Lors d'une étape E205'" identique à l'étape E205 décrite en relation avec la figure 2, le serveur de gestion 13 obtient depuis le serveur d'application 14 une information représentative du nombre et de l'état des terminaux associés à l'identité publique affectée à l'utilisateur UB.

Los de l'étape E206'" identique à l'étape E206 décrite en relation avec la figure 2, le serveur de gestion 13 envoie au terminal 15 l'information représentative du nombre et de l'état des terminaux associés à l'identité publique affectée à l'utilisateur UB.

Le terminal 15 restitue ensuite l'information reçue à l'utilisateur UA du terminal 15 lors de l'étape E207'" identique à l'étape E207 décrite en relation avec la figure 2. Le terminal 15 affiche par exemple sur son écran une interface comprenant une liste des terminaux 11 et 12 associés à l'identité publique affectée à l'utilisateur UB, ainsi que l'état de ces terminaux.

L'utilisateur UA peut alors choisir un ou plusieurs terminaux vers lesquels il souhaite envoyer la demande de communication.

Lors d'une étape E401, le terminal 15 reçoit une commande d'interaction utilisateur de l'utilisateur UA pour sélectionner un terminal cible parmi les terminaux associés à l'identité publique affectée à l'utilisateur UB. Le terminal cible sélectionné est ici le terminal 11.

La commande de sélection du terminal 11 est envoyée par le terminal 15 au serveur de gestion 13 lors d'une étape E402. Le serveur de gestion 13 envoie la commande de sélection au serveur d'application 14 lors d'une étape E403.

Le serveur d'application 14 envoie au terminal 11 un message de demande de communication sous la forme d'un message SIP INVITE lors d'une étape E201"'.

Suite à la réception, par le terminal 11, de la demande de communication, le terminal 11 répond par l'envoi au serveur d'application 14 d'un message SIP 180 Ringing lors de l'étape E208"'. Le message SIP 180 Ringing est prolongé vers le terminal 15 par le serveur d'application 14 lors de l'étape E210"'.

Lors de l'étape E301'", l'utilisateur UC décroche son terminal 11 afin de prendre la communication demandée lors de l'étape E201'" par le terminal 15. Le terminal 11 envoie alors un message SIP 200 OK au serveur d'application 14. Le serveur d'application 14 prolonge ensuite ce message vers le terminal 15 lors d'une étape E306"'. La communication s'établit ensuite de manière connue entre les terminaux 15 et 11.

La figure 6 illustre un dispositif 60 permettant de mettre en oeuvre le procédé de gestion de l'établissement d'une communication selon un mode particulier de réalisation de l'invention.

Le dispositif comprend un espace de stockage 62, par exemple une mémoire (MEM), une unité de traitement 63, équipée par exemple d'un microprocesseur (PROC), et pilotée par le programme d'ordinateur (PG) 61, mettant en oeuvre le procédé de gestion de l'établissement d'une communication tel que décrit dans l'invention en relation avec l'une quelconque des figures 2 à 5. A l'initialisation, les instructions de code du programme d'ordinateur 61 sont par exemple chargées en mémoire avant d'être exécutées par le processeur de l'unité de traitement 63. Le microprocesseur de l'unité de traitement 63 met en oeuvre les étapes du procédé de gestion de l'établissement d'une communication entre un terminal émetteur et un groupe de terminaux associés à une même identité publique partagée. Le microprocesseur de l'unité de traitement 63 met notamment en oeuvre les étapes de réception d'une requête en provenance du terminal émetteur de la demande de communication pour obtenir une information représentative du nombre et de l'état des terminaux du groupe de terminaux associés à l'identité publique partagée, d'obtention de ladite information, et d'envoi au terminal émetteur de la demande de communication de ladite information obtenue en vue d'une restitution à l'utilisateur du terminal émetteur de la demande de communication, selon les instructions du programme d'ordinateur 61.

Le dispositif comporte aussi un module de communication 66 (COM), par exemple une unité d'accès à un réseau, permettant par exemple au dispositif 60 de communiquer avec le réseau de communication 10 de la figure 1 et les différents équipements qui sont reliés au réseau de communication. Les moyens de communication 66 permettent notamment au dispositif 60 d'échanger des messages avec le serveur 14 et les terminaux 15, 11 et 12 de la figure 1.

Selon un mode particulier de réalisation de l'invention, l'espace de stockage 62 permet de stocker des données de configuration du service de gestion de l'établissement d'une communication auquel a souscrit un utilisateur UB d'un terminal du groupe de terminaux associés à l'identité publique partagée.

Selon un mode particulier de réalisation de l'invention, le dispositif 60 est compris dans un serveur, tel que le serveur 13 de la figure 1. La figure 7 illustre un dispositif 70 permettant de mettre en oeuvre le procédé de commande de l'établissement d'une communication selon un mode particulier de réalisation de l'invention.

Le dispositif comprend un espace de stockage 72, par exemple une mémoire (MEM), une unité de traitement 73, équipée par exemple d'un microprocesseur (PROC), et pilotée par le programme d'ordinateur (PG) 71, mettant en oeuvre le procédé de commande de l'établissement d'une communication tel que décrit dans l'invention en relation avec l'une quelconque des figures 2 à 5. A l'initialisation, les instructions de code du programme d'ordinateur 71 sont par exemple chargées en mémoire avant d'être exécutées par le processeur de l'unité de traitement 73. Le microprocesseur de l'unité de traitement 73 met en oeuvre les étapes du procédé de commande de l'établissement d'une communication entre le dispositif 70 et un groupe de terminaux associés à une même identité publique partagée, et notamment une étape d'émission d'une demande de communication à destination de l'identité publique partagée, une étape d'envoi à un serveur de gestion, d'une requête pour obtenir une information représentative du nombre et de l'état des terminaux du groupe de terminaux associés à l'identité publique partagée, une étape de réception de ladite information en provenance du serveur, et une étape de restitution de ladite information à un utilisateur du dispositif 70, selon les instructions du programme d'ordinateur 71.

Le dispositif comprend également des moyens d'interaction utilisateur 74 (I/O) permettant à l'utilisateur d'interagir avec le dispositif 70, par exemple pour sélectionner des éléments (commandes, terminaux) affichés sur l'écran du dispositif 70. Cette interface utilisateur peut par exemple correspondre à un clavier, une souris, ou un écran tactile.

Le dispositif 70 comprend des moyens de restitution 75 d'information représentative du nombre et de l'état des terminaux du groupe de terminaux associés à l'identité publique partagée.

Selon un mode particulier de réalisation de l'invention, les moyens de restitution correspondent à un moyen d'affichage (AFF), tel qu'un écran.

Le dispositif comporte aussi des moyens de communication 76 (COM), par exemple une unité d'accès à un réseau, permettant par exemple au dispositif 70 d'établir des communications via le réseau de communication 10 de la figure 1, de recevoir des messages comportant une information représentative du nombre et de l'état des terminaux du groupe de terminaux associés à l'identité publique partagée, ou une information de mise à jour de l'état des terminaux dudit groupe.

Selon un mode particulier de réalisation de l'invention, le dispositif 70 est apte à interpréter les messages reçus en provenance d'un serveur de gestion du réseau de communication, par exemple le serveur 13 décrit en relation avec la figure 1, pour restituer à l'utilisateur du dispositif une information sur l'état des terminaux vers lesquels le dispositif 70 a émis une demande de communication.

Selon un autre mode particulier de réalisation de l'invention, le dispositif 70 est apte à interpréter les messages de signalisation (reçus en réponse à une demande de communication) reçus en provenance des terminaux, via le réseau de communication, pour restituer à l'utilisateur du dispositif une information sur l'état des terminaux vers lesquels le dispositif a émis une demande de communication.

Le dispositif 70 est compris dans un terminal, tel que par exemple le terminal 15 de la figure 1. Plus généralement, le dispositif 70 est compris dans un terminal tel que par exemple un ordinateur personnel, fixe ou mobile, un terminal téléphonique fixe, un téléphone mobile, une tablette, une télévision connectée, un smartphone (téléphone intelligent en anglais), etc...

## Revendications

1. Procédé de commande de l'établissement d'une communication entre un terminal émetteur (15) et un groupe de terminaux (11, 12), le groupe de terminaux étant associé à une même identité publique partagée, le procédé étant tel qu'il comprend, suite à une étape d'envoi par le terminal émetteur d'une demande de communication (E200) à destination de l'identité publique partagée, la demande de communication étant transmise à des terminaux du groupe de terminaux par un serveur d'application (14) gérant la signalisation des appels destinés à l'identité publique partagée :
- une étape d'envoi (E203) à un serveur de gestion (13), d'une requête d'obtention d'une information représentative du nombre et de l'état des terminaux vers lesquels la demande de communication a été transmise,
- une étape de réception (E206) de ladite information en provenance du serveur de gestion, et
- une étape de restitution (E207) de ladite information à un utilisateur du terminal émetteur de ladite demande de communication.

2. Procédé de commande de l'établissement d'une communication selon la revendication 1, **caractérisé en ce qu'**en réponse à la demande de communication émise par le terminal émetteur, le procédé comprend, préalablement à l'étape d'envoi au serveur de gestion de la requête d'obtention de l'information représentative du nombre et de l'état des terminaux vers lesquels la demande de communication a été transmise, une étape de réception, en provenance du serveur d'application, d'un message contenant une information permettant au terminal émetteur d'accéder au serveur de gestion.

3. Procédé de commande de l'établissement d'une communication selon la revendication 1, **caractérisé en ce que**, suite à l'étape de restitution de ladite information, le procédé comprend en outre :
- une étape d'interaction utilisateur (E401) sur le terminal émetteur de la demande de communication permettant de sélectionner parmi les terminaux du groupe de terminaux associés à l'identité publique partagée, au moins un terminal destinataire vers lequel la demande de communication doit être transmise, et
- une étape d'envoi (E402) au serveur de gestion, d'une commande de sélection du terminal destinataire.

4. Procédé de commande de l'établissement d'une communication selon la revendication 1, **caractérisé en ce qu'**il comprend en outre suite à l'étape de restitution de ladite information :
- une étape d'interaction utilisateur (E215) sur le terminal émetteur de la demande de communication permettant de sélectionner parmi les terminaux du groupe de terminaux associés à l'identité publique partagée, au moins un terminal, et
- une étape d'envoi (E216) au serveur de gestion, d'une commande d'inhibition de l'envoi de la demande de communication vers le terminal sélectionné.

5. Procédé de commande de l'établissement d'une communication selon l'une quelconque des revendications 1 à 4, **caractérisé en ce que** suite à la réception (E306) en provenance d'un premier terminal du groupe de terminaux associés à l'identité publique partagée, d'une réponse positive à la demande de communication, le procédé comprend en outre :
- une étape d'interaction utilisateur (E302) sur le terminal émetteur de la demande de communication permettant de sélectionner parmi les terminaux du groupe de terminaux associés à l'identité publique partagée, au moins un deuxième terminal, et
- une étape d'envoi (E303) au serveur de gestion, d'une commande de continuation d'envoi de la demande de communication vers le deuxième terminal sélectionné.

6. Procédé de gestion de l'établissement d'une communication entre un terminal émetteur (15) et un groupe de terminaux (11, 12), le groupe de terminaux étant associé à une même identité publique partagée, le procédé étant tel qu'il comprend, suite à une étape d'envoi par le terminal émetteur d'une demande de communication (E200) à destination de l'identité publique partagée, la demande de communication étant transmise à des terminaux du groupe de terminaux par un serveur d'application (14) gérant la signalisation des appels destinés à l'identité publique partagée:
- une étape de réception (E203) en provenance du terminal émetteur de la demande de communication d'une requête d'obtention d'une information représentative du nombre et de l'état des terminaux destinataires de la demande de communication,
- une étape d'obtention (E205) de ladite information à partir du serveur d'application,
et
- une étape d'envoi (E206) au terminal émetteur de la demande de communication de ladite information obtenue en vue d'une restitution à l'utilisateur du terminal émetteur de la demande de communication.

7. Procédé de gestion de l'établissement d'une communication selon la revendication 6, **caractérisé en ce qu'**il comprend une étape d'envoi par le serveur d'application, au terminal émetteur, d'un message contenant une information permettant au terminal émetteur d'accéder au serveur de gestion.

8. Procédé de gestion de l'établissement d'une communication selon l'une quelconque des revendications 6 ou 7, **caractérisé en ce que** l'étape d'envoi au terminal émetteur de la demande de communication de l'information représentative du nombre et de l'état des terminaux du groupe de terminaux associés à l'identité publique partagée n'est mise en oeuvre que si le terminal émetteur de la demande de communication est un terminal qui a été autorisé par un utilisateur d'un terminal associé à l'identité publique partagée à obtenir l'état d'un terminal dudit groupe de terminaux.

9. Procédé de gestion de l'établissement d'une communication selon l'une quelconque des revendications 6 à 8, **caractérisé en ce qu'**il comprend en outre :
- une étape de réception (E216, E303) d'une commande, en provenance du terminal émetteur de la demande de communication, d'inhibition ou de continuation de l'envoi de la demande de communication vers un terminal sélectionné parmi les terminaux du groupe de terminaux associés à l'identité publique partagée, et
- une étape d'envoi (E217, E304) au réseau de communication d'un message de gestion de la demande de communication, provoquant l'inhibition ou la continuation de l'envoi de la demande de communication vers le terminal sélectionné.

10. Procédé de gestion de l'établissement d'une communication selon l'une quelconque des revendications 6 à 9, **caractérisé en ce qu'**il comprend en outre une étape d'envoi (E219, E2191) à un terminal destinataire du groupe de terminaux d'une information indiquant à l'utilisateur du terminal destinataire que le terminal émetteur de la demande de communication a émis une requête d'obtention d'une information représentative du nombre et de l'état du groupe de terminaux associés à l'identité publique partagée.

11. Procédé de gestion de l'établissement d'une communication selon la revendication 10, **caractérisé en ce qu'**il comprend:
- une étape de réception (E220) d'une information de mise à jour d'un état relatif à un terminal destinataire du groupe de terminaux associés à l'identité publique partagée, et
- une étape d'envoi (E221) au terminal émetteur de la demande de communication d'un message comprenant ladite information de mise à jour et permettant de modifier sur le terminal émetteur de la demande de communication la restitution de l'information représentative du nombre et de l'état du groupe de terminaux associés à l'identité publique partagée.

12. Terminal de commande (15) de l'établissement d'une communication entre ledit terminal et un groupe de terminaux, le groupe de terminaux étant associé à une même identité publique partagée, le terminal étant tel qu'il comprend :
- des moyens d'envoi (71, 72, 73, 76) à un serveur de gestion, d'une requête d'obtention d'une information représentative du nombre et de l'état des terminaux du groupe de terminaux vers lesquels une demande de communication émise par ledit terminal de commande, à destination de l'identité publique partagée, a été transmise via un serveur d'application (14) gérant la signalisation des appels destinés à l'identité publique partagée,
- des moyens de réception (71, 72, 73, 76) de ladite information, et
- des moyens de restitution (71, 72, 73, 76) de ladite information à un utilisateur dudit terminal.

13. Terminal de commande (15) selon la revendication 12 **caractérisé en ce qu'**il comprend :
- des moyens d'interaction utilisateur (74) permettant de sélectionner parmi les terminaux du groupe de terminaux associés à l'identité publique partagée, au moins un terminal, et
- des moyens d'envoi (71, 72, 73, 76) d'une commande d'inhibition ou de continuation de l'envoi de la demande de communication vers le terminal sélectionné.

14. Système de gestion (13, 14) de l'établissement d'une communication entre un terminal émetteur et un groupe de terminaux (11, 12), le groupe de terminaux étant associé à une même identité publique partagée, le système étant tel qu'il comprend :
- des moyens de réception d'une demande de communication (E200) émise par le terminal émetteur, à destination de l'identité publique partagée,
- des moyens de réception (61, 62, 63, 66) en provenance du terminal émetteur de la demande de communication d'une requête d'obtention d'une information représentative du nombre et de l'état des terminaux du groupe de terminaux vers lesquels la demande de communication a été transmise,
- des moyens d'obtention (61, 62, 63, 66) de ladite information à partir d'un serveur d'application (14) gérant la signalisation des appels destinés à l'identité publique partagée, et
- des moyens d'envoi (61, 62, 63, 66) au terminal émetteur de la demande de communication de ladite information obtenue en vue d'une restitution à l'utilisateur du terminal émetteur de la demande de communication.

15. Programme d'ordinateur comportant des instructions de code de programme pour l'exécution des étapes du procédé de commande de l'établissement d'une communication selon l'une quelconque des revendications 1 à 5 ou des étapes du procédé de gestion de l'établissement d'une communication selon l'une quelconque des revendications 6 à 11, lorsque le programme est exécuté par un processeur.

## Patentansprüche

1. Verfahren zur Steuerung der Herstellung einer Kommunikation zwischen einem sendenden Endgerät (15) und einer Gruppe von Endgeräten (11, 12), wobei die Gruppe von Endgeräten ein und derselben IP Multimedia Public Identity (IMPU) zugeordnet ist, wobei das Verfahren derart beschaffen ist, dass es beinhaltet, im Anschluss an einen Schritt des Sendens einer an die IMPU gerichteten Kommunikationsanfrage (E200), durch das sendende Endgerät, wobei die Kommunikationsanfrage an Endgeräte der Gruppe von Endgeräten durch einen Anwendungsserver (14) übertragen wird, der die Signalisierung der für die IMPU bestimmten Rufe verwaltet:
- einen Schritt des Sendens (E203) einer Anforderung zur Erlangung einer Information, die für die Anzahl und den Zustand der Endgeräte, an welche die Kommunikationsanfrage übertragen worden ist, repräsentativ ist, an einen Verwaltungsserver (13),
- einen Schritt des Empfangens (E206) dieser von dem Verwaltungsserver stammenden Information, und
- einen Schritt der Übermittlung (E207) dieser Information an einen Benutzer des die Kommunikationsanfrage sendenden Endgerätes.

2. Verfahren zur Steuerung der Herstellung einer Kommunikation nach Anspruch 1, **dadurch gekennzeichnet, dass**, in Reaktion auf die von dem sendenden Endgerät gesendete Kommunikationsanfrage, das Verfahren, vor dem Schritt des Sendens der Anforderung zur Erlangung der Information, die für die Anzahl und den Zustand der Endgeräte, an welche die Kommunikationsanfrage übertragen worden ist, repräsentativ ist, an den Verwaltungsserver, einen Schritt des Empfangens einer von dem Anwendungsserver stammenden Nachricht beinhaltet, die eine Information enthält, die dem sendenden Endgerät ermöglicht, auf den Verwaltungsserver zuzugreifen.

3. Verfahren zur Steuerung der Herstellung einer Kommunikation nach Anspruch 1, **dadurch gekennzeichnet, dass** das Verfahren im Anschluss an den Schritt der Übermittlung der Information außerdem beinhaltet:
- einen Schritt der Interaktion mit dem Benutzer (E401) an dem die Kommunikationsanfrage sendenden Endgerät, der es ermöglicht, aus den Endgeräten der Gruppe von Endgeräten, die der IMPU zugeordnet sind, wenigstens ein Ziel-Endgerät auszuwählen, an das die Kommunikationsanfrage übertragen werden soll, und
- einen Schritt des Sendens (E402) eines Befehls zur Auswahl des Ziel-Endgerätes an den Verwaltungsserver.

4. Verfahren zur Steuerung der Herstellung einer Kommunikation nach Anspruch 1, **dadurch gekennzeichnet, dass** es außerdem im Anschluss an den Schritt der Übermittlung der Information beinhaltet:
- einen Schritt der Interaktion mit dem Benutzer (E215) an dem die Kommunikationsanfrage sendenden Endgerät, der es ermöglicht, aus den Endgeräten der Gruppe von Endgeräten, die der IMPU zugeordnet sind, wenigstens ein Endgerät auszuwählen, und
- einen Schritt des Sendens (E216), an den Verwaltungsserver, eines Befehls zum Sperren des Sendens der Kommunikationsanfrage an das ausgewählte Endgerät.

5. Verfahren zur Steuerung der Herstellung einer Kommunikation nach einem der Ansprüche 1 bis 4, **dadurch gekennzeichnet, dass**, im Anschluss an den Empfang (E306) einer von einem ersten Endgerät der Gruppe von Endgeräten, die der IMPU zugeordnet sind, stammenden positiven Antwort auf die Kommunikationsanfrage, das Verfahren außerdem beinhaltet:
- einen Schritt der Interaktion mit dem Benutzer (E302) an dem die Kommunikationsanfrage sendenden Endgerät, der es ermöglicht, aus den Endgeräten der Gruppe von Endgeräten, die der IMPU zugeordnet sind, wenigstens ein zweites Endgerät auszuwählen, und
- einen Schritt des Sendens (E303), an den Verwaltungsserver, eines Befehls zur Fortsetzung des Sendens der Kommunikationsanfrage an das zweite ausgewählte Endgerät.

6. Verfahren zur Verwaltung der Herstellung einer Kommunikation zwischen einem sendenden Endgerät (15) und einer Gruppe von Endgeräten (11, 12), wobei die Gruppe von Endgeräten ein und derselben IP Multimedia Public Identity (IMPU) zugeordnet ist, wobei das Verfahren derart beschaffen ist, dass es beinhaltet, im Anschluss an einen Schritt des Sendens einer an die IMPU gerichteten Kommunikationsanfrage (E200) durch das sendende Endgerät, wobei die Kommunikationsanfrage an Endgeräte der Gruppe von Endgeräten durch einen Anwendungsserver (14) übertragen wird, der die Signalisierung der für die IMPU bestimmten Rufe verwaltet:
- einen Schritt des Empfangens (E203) einer von dem die Kommunikationsanfrage sendenden Endgerät stammenden Anforderung zur Erlangung einer Information, die für die Anzahl und den Zustand der Endgeräte, an welche die Kommunikationsanfrage gerichtet ist, repräsentativ ist,
- einen Schritt der Erlangung (E205) dieser Information von dem Anwendungsserver, und
- einen Schritt des Sendens (E206) dieser erhaltenen Information an das die Kommunikationsanfrage sendende Endgerät, zwecks Übermittlung an den Benutzer des die Kommunikationsanfrage sendenden Endgerätes.

7. Verfahren zur Verwaltung der Herstellung einer Kommunikation nach Anspruch 6, **dadurch gekennzeichnet, dass** es außerdem einen Schritt des Sendens einer Nachricht, die eine Information enthält, die dem sendenden Endgerät ermöglicht, auf den Verwaltungsserver zuzugreifen, durch den Anwendungsserver an das sendende Endgerät beinhaltet.

8. Verfahren zur Verwaltung der Herstellung einer Kommunikation nach einem der Ansprüche 6 oder 7, **dadurch gekennzeichnet, dass** der Schritt des Sendens der Information, die für die Anzahl und den Zustand der Endgeräte der Gruppe von Endgeräten, die der IMPU zugeordnet sind, repräsentativ ist, an das die Kommunikationsanfrage sendende Endgerät nur dann durchgeführt wird, wenn das die Kommunikationsanfrage sendende Endgerät ein Endgerät ist, welches von einem Benutzer eines der IMPU zugeordneten Endgerätes autorisiert worden ist, den Zustand eines Endgerätes der Gruppe von Endgeräten zu erhalten.

9. Verfahren zur Verwaltung der Herstellung einer Kommunikation nach einem der Ansprüche 6 bis 8, **dadurch gekennzeichnet, dass** es außerdem beinhaltet:
- einen Schritt des Empfangens (E216, E303) eines von dem die Kommunikationsanfrage sendenden Endgerätes stammenden Befehls zum Sperren oder zur Fortsetzung des Sendens der Kommunikationsanfrage an ein Endgerät, das aus den Endgeräten der Gruppe von Endgeräten ausgewählt ist, die der IMPU zugeordnet sind, und
- einen Schritt des Sendens (E217, E304) einer Nachricht zur Verwaltung der Kommunikationsanfrage an das Kommunikationsnetz, welche das Sperren oder die Fortsetzung des Sendens der Kommunikationsanfrage an das ausgewählte Endgerät hervorruft.

10. Verfahren zur Verwaltung der Herstellung einer Kommunikation nach einem der Ansprüche 6 bis 9, **dadurch gekennzeichnet, dass** es außerdem einen Schritt des Sendens (E219, E2191) einer Information an ein Ziel-Endgerät der Gruppe von Endgeräten beinhaltet, die dem Benutzer des Ziel-Endgerätes anzeigt, dass das die Kommunikationsanfrage sendende Endgerät eine Anforderung zur Erlangung einer Information, die für die Anzahl und den Zustand der Gruppe von Endgeräten, die der IMPU zugeordnet sind, repräsentativ ist, gesendet hat.

11. Verfahren zur Verwaltung der Herstellung einer Kommunikation nach Anspruch 10, **dadurch gekennzeichnet, dass** es beinhaltet:
- einen Schritt des Empfangens (E220) einer Information zur Aktualisierung eines Zustands, der ein Ziel-Endgerät der Gruppe von Endgeräten betrifft, die der IMPU zugeordnet sind, und
- einen Schritt des Sendens (E221) einer Nachricht an das die Kommunikationsanfrage sendende Endgerät, welche die Information zur Aktualisierung enthält und ermöglicht, an dem die Kommunikationsanfrage sendenden Endgerät die Übermittlung der für die Anzahl und den Zustand der Gruppe von Endgeräten, die der IMPU zugeordnet sind, repräsentativen Information zu modifizieren.

12. Endgerät zur Steuerung (15) der Herstellung einer Kommunikation zwischen dem besagten Endgerät und einer Gruppe von Endgeräten, wobei die Gruppe von Endgeräten ein und derselben IP Multimedia Public Identity (IMPU) zugeordnet ist, wobei das Endgerät derart beschaffen ist, dass es aufweist:
- Mittel zum Senden (71, 72, 73, 76), an einen Verwaltungsserver, einer Anforderung zur Erlangung einer Information, die für die Anzahl und den Zustand der Endgeräte der Gruppe von Endgeräten, an welche eine von dem Endgerät zur Steuerung gesendete, an die IMPU gerichtete Kommunikationsanfrage übertragen worden ist, repräsentativ ist, über einen Anwendungsserver (14), der die Signalisierung der für die IMPU bestimmten Rufe verwaltet,
- Mittel zum Empfang (71, 72, 73, 76) dieser Information,
- Mittel zur Übermittlung (71, 72, 73, 76) dieser Information an einen Benutzer des Endgerätes.

13. Endgerät zur Steuerung (15) nach Anspruch 12, **dadurch gekennzeichnet, dass** es aufweist:
- Mittel zur Interaktion mit dem Benutzer (74), die es ermöglichen, aus den Endgeräten der Gruppe von Endgeräten, die der IMPU zugeordnet sind, wenigstens ein Endgerät auszuwählen, und
- Mittel zum Senden (71, 72, 73, 76) eines Befehls zum Sperren oder zur Fortsetzung des Sendens der Kommunikationsanfrage an das ausgewählte Endgerät.

14. System zur Verwaltung (13, 14) der Herstellung einer Kommunikation zwischen einem sendenden Endgerät und einer Gruppe von Endgeräten (11, 12), wobei die Gruppe von Endgeräten ein und derselben IP Multimedia Public Identity (IMPU) zugeordnet ist, wobei das System derart beschaffen ist, dass es aufweist:
- Mittel zum Empfang einer von dem sendenden Endgerät gesendeten, an die IMPU gerichteten Kommunikationsanfrage (E200),
- Mittel zum Empfang (61, 62, 63, 66) einer von dem die Kommunikationsanfrage sendenden Endgerät stammenden Anforderung zur Erlangung einer Information, die für die Anzahl und den Zustand der Endgeräte der Gruppe von Endgeräten, an welche die Kommunikationsanfrage übertragen worden ist, repräsentativ ist,
- Mittel zur Erlangung (61, 62, 63, 66) der besagten Information von einem Anwendungsserver (14), der die Signalisierung der für die IMPU bestimmten Rufe verwaltet, und
- Mittel zum Senden (61, 62, 63, 66) dieser erhaltenen Information an das die Kommunikationsanfrage sendende Endgerät, zwecks Übermittlung an den Benutzer des die Kommunikationsanfrage sendenden Endgerätes.

15. Computerprogramm, welches Programmcodeanweisungen zur Ausführung der Schritte des Verfahrens zur Steuerung der Herstellung einer Kommunikation nach einem der Ansprüche 1 bis 5 oder der Schritte des Verfahrens zur Verwaltung der Herstellung einer Kommunikation nach einem der Ansprüche 6 bis 11, wenn das Programm von einem Prozessor ausgeführt wird, enthält.

## Claims

1. Method for commanding the set-up of a communication between an issuing terminal (15) and a group of terminals (11, 12), the group of terminals being associated with one and the same shared public identity, the method being such it comprises, following a step of the issuing terminal sending a communication request (E200) intended for the shared public identity, with the communication request being transmitted to terminals in the group of terminals by an application server (14) managing the signaling of the calls intended for the shared public identity:
- a step of sending (E203) to a management server (13) a request to obtain an item of information representing the number and the state of the terminals to which the communication request has been transmitted,
- a step of receiving (E206) said item of information from the management server, and
- a step of returning (E207) said item of information to a user of the terminal issuing said communication request.

2. Method for commanding the set-up of a communication according to Claim 1, **characterized in that** in reply to the communication request issued by the issuing terminal, the method comprises, prior to the step of sending to the management server the request to obtain the item of information representing the number and the state of the terminals to which the communication request has been transmitted, a step of receiving, from the application server, a message containing an item of information allowing the issuing terminal to access the management server.

3. Method for commanding the set-up of a communication according to Claim 1, **characterized in that** following the step of returning said item of information, the method furthermore comprises:
- a step of user interaction (E401) on the terminal issuing the communication request making it possible to select among the terminals in the group of terminals associated with the shared public identity at least one destination terminal to which the communication request needs to be transmitted, and
- a step of sending (E402) to the management server a command to select the destination terminal.

4. Method for commanding the set-up of a communication according to Claim 1, **characterized in that** it furthermore comprises, following the step of returning said item of information:
- a step of user interaction (E215) on the terminal issuing the communication request making it possible to select among the terminals in the group of terminals associated with the shared public identity, at least one terminal, and
- a step of sending (E216) to the management server a command to inhibit the sending of the communication request to the selected terminal.

5. Method for commanding the set-up of a communication according to any one of Claims 1 to 4, **characterized in that** following the reception (E306), from a first terminal in the group of terminals associated with the shared public identity, of a positive reply to the communication request, the method furthermore comprises:
- a step of user interaction (E302) on the terminal issuing the communication request making it possible to select among the terminals in the group of terminals associated with the shared public identity at least one second terminal, and
- a step of sending (E303) to the management server a command to continue the sending of the communication request to the second selected terminal.

6. Method for managing the set-up of a communication between an issuing terminal (15) and a group of terminals (11, 12), the group of terminals being associated with one and the same shared public identity, the method being such that it comprises, following a step of the issuing terminal sending a communication request (E200) intended for the shared public identity, with the communication request being transmitted to terminals in the group of terminals by an application server (14) managing the signaling of the calls intended for the shared public identity:
- a step of receiving (E203) from the terminal issuing the communication request a request to obtain an item of information representing the number and the state of the destination terminals for the communication request,
- a step of obtaining (E205) said item of information from the application server, and
- a step of sending (E206) to the terminal issuing the communication request said obtained item of information with the aim of returning it to the user of the terminal issuing the communication request.

7. Method for managing the set-up of a communication according to Claim 6, **characterized in that** it comprises a step of the application server sending, to the issuing terminal, a message containing an item of information allowing the issuing terminal to access the management server.

8. Method for managing the set-up of a communication according to either of Claims 6 and 7, **characterized in that** the step of sending to the terminal issuing the communication request the information representing the number and the state of the terminals in the group of terminals associated with the shared public identity is only implemented if the terminal issuing the communication request is a terminal that has been authorized by a user of a terminal associated with the shared public identity to obtain the state of a terminal in said group of terminals.

9. Method for managing the set-up of a communication according to any one of Claims 6 to 8, **characterized in that** it furthermore comprises:
- a step of receiving (E216, E303) a command, from the terminal issuing the communication request, to inhibit or to continue the sending of the communication request to a terminal selected among the terminals in the group of terminals associated with the shared public identity, and
- a step of sending (E217, E304) to the communication network a message for management of the communication request, provoking the inhibition or the continuation of the sending of the communication request to the selected terminal.

10. Method for managing the set-up of a communication according to any one of Claims 6 to 9, **characterized in that** it furthermore comprises a step of sending (E219, E2191) to a destination terminal in the group of terminals an item of information indicating to the user of the destination terminal that the terminal issuing the communication request has issued a request to obtain an item of information representing the number and the state of the group of terminals associated with the shared public identity.

11. Method for managing the set-up of a communication according to Claim 10, **characterized in that** it comprises:
- a step of receiving (E220) an item of information updating a state relating to a destination terminal in the group of terminals associated with the shared public identity, and
- a step of sending (E221) to the terminal issuing the communication request a message comprising said item of updating information and making it possible to modify on the terminal issuing the communication request the return of the item of information representing the number and the state of the group of terminals associated with the shared public identity.

12. Terminal (15) for commanding the set-up of a communication between said terminal and a group of terminals, the group of terminals being associated with one and the same shared public identity, the terminal being such that it comprises:
- means (71, 72, 73, 76) for sending to a management server a request to obtain an item of information representing the number and the state of the terminals in the group of terminals to which a communication request issued by said command terminal, intended for the shared public identity, has been transmitted via an application server (14) managing the signaling of the calls intended for the shared public identity,
- means (71, 72, 73, 76) for receiving said item of information, and
- means (71, 72, 73, 76) for returning said item of information to a user of said terminal.

13. Command terminal (15) according to Claim 12, **characterized in that** it comprises:
- user interaction means (74) making it possible to select, among the terminals in the group of terminals associated with the shared public identity, at least one terminal, and
- means (71, 72, 73, 76) for sending a command to inhibit or to continue the sending of the communication request to the selected terminal.

14. System (13, 14) for managing the set-up of a communication between an issuing terminal and a group of terminals (11, 12), the group of terminals being associated with one and the same shared public identity, the system being such that it comprises:
- means for receiving a communication request (E200) issued by the issuing terminal, intended for the shared public identity,
- means (61, 62, 63, 66) for receiving from the terminal issuing the communication request a request to obtain an item of information representing the number and the state of the terminals in the group of terminals to which the communication request has been transmitted,
- means (61, 62, 63, 66) for obtaining said item of information from an application server (14) managing the signaling of the calls intended for the shared public identity, and
- means (61, 62, 63, 66) for sending to the terminal issuing the communication request said obtained item of information with the aim of returning it to the user of the terminal issuing the communication request.

15. Computer program including program code instructions for the execution of the steps of the method for commanding the set-up of a communication according to any one of Claims 1 to 5 or of the steps of the method for managing the set-up of a communication according to any one of Claims 6 to 11 when the program is executed by a processor.
